# EUROPEAN PATENT APPLICATION

(11) **EP 2 988 196 A1**
(43) Date of publication of application: **24.02.2016**
(21) Application number: 14863429.8
(22) Date of filing: 21.11.2014
(51) Int. Cl.: G06F 3/0481, G06F 3/0487

(54) **MESSAGE PROCESSING METHOD AND APPARATUS**

(30) Priority: 22.11.2013 CN 201310596674
(71) Applicant: Huawei Device Co., Ltd., Shenzhen, Guangdong 518129 (CN)
(72) Inventor: ZHOU, Wenyu, Shenzhen Guangdong 518129 (CN)
(74) Representative: Pfenning, Meinig & Partner mbB
(86) International application number: PCT/CN2014/091902
(87) International publication number: WO 2015/074604

(57) **Abstract**

Embodiments of the present invention relate to the field of information technologies, and disclose a message processing method and apparatus that can decrease complexity of message processing. The method includes: displaying a message on a lock screen interface first; then, acquiring an operation track corresponding to the message; and finally determining whether the operation track is the same as a preset operation track, and processing the message if the operation track is the same as the preset operation track. The embodiments of the present invention are applicable to message processing by a terminal device in a lock screen state.

## Description

### TECHNICAL FIELD

Embodiments of the present invention relates to the field of information technologies, and in particular, to an information processing method and apparatus.

### BACKGROUND

With development of information technologies, terminal devices are widely applied in daily lives. Currently, a graphical interface of a terminal device generally includes a normal use interface and a lock screen interface. When the terminal device is in a lock screen state, the lock screen interface of the terminal device displays partial information such as time information and weather information. However, in the lock screen state, a user cannot process an application program of the terminal device. For example, in the lock screen state, the user cannot make a phone call, send a short message service message, delete a short message service message, start an application program, or the like, which can avoid an operation that is not permitted by the user or a misoperation of the user.

Currently, when the terminal device in the lock screen state receives a message, the terminal device needs to be unlocked to display the graphical interface of the terminal device first, and then the message is processed. However, in the lock screen state, before the message is processed, an unlock operation needs to be performed on the terminal device first, which complicates message processing.

### SUMMARY

Embodiments of the present invention provide a message processing method and apparatus, which can decrease complexity of message processing.

Technical solutions used in the embodiments of the present invention are:

According to a first aspect, an embodiment of the present invention provides a message processing method, including:
displaying a message on a lock screen interface;
acquiring an operation track corresponding to the message;
determining whether the operation track is the same as a preset operation track; and
processing the message if the operation track is the same as the preset operation track.

In a first implementation manner of the first aspect, before the processing the message, the method further includes:
displaying prompt information, where the prompt information is used to confirm whether to process the message; and
determining whether confirmation information corresponding to the prompt information is received; and
the processing the message includes:
   processing the message if the confirmation information corresponding to the prompt information is received.

With reference to the first aspect or the first implementation manner of the first aspect, in a second implementation manner of the first aspect, before the acquiring an operation track corresponding to the message, the method further includes:
displaying a message processing area;
the determining whether the operation track is the same as a preset operation track includes:
   determining whether the operation track the same as the preset operation track exists in the message processing area; and
   the processing the message if the operation track is the same as the preset operation track includes:
      processing the message if the operation track the same as the preset operation track exists in the message processing area.

With reference to the first aspect, or the first implementation manner of the first aspect, or the second implementation manner of the first aspect, in a third implementation manner of the first aspect, the displaying a message processing area includes:
displaying a first message processing area and a second message processing area; and
the determining whether the operation track the same as the preset operation track exists in the message processing area includes:
   determining whether the operation track the same as the preset operation track exists in the first message processing area or the second message processing area.

With reference to the first aspect, or the first implementation manner of the first aspect, or the second implementation manner of the first aspect, or the third implementation manner of the first aspect, in a fourth implementation manner of the first aspect, the processing the message if the operation track the same as the preset operation track exists in the message processing area includes:
performing first processing on the message if the operation track the same as the preset operation track exists in the first message processing area; or
performing second processing on the message if the operation track the same as the preset operation track exists in the second message processing area.

With reference to the first aspect, or the first implementation manner of the first aspect, or the second implementation manner of the first aspect, or the third implementation manner of the first aspect, or the fourth implementation manner of the first aspect, in a fifth implementation manner of the first aspect, the acquiring an operation track corresponding to the message includes:
acquiring a sliding track corresponding to the message;
the determining whether the operation track is the same as a preset operation track includes:
   determining whether the sliding track is the same as a preset sliding track, where the preset sliding track is used to trigger deletion of the message; and
   the processing the message if the operation track is the same as the preset operation track includes:
      deleting the message if the sliding track is the same as the preset sliding track.

According to a second aspect, an embodiment of the present invention provides a message processing apparatus, including:
a displaying unit, configured to display a message on a lock screen interface;
an acquiring unit, configured to acquire an operation track corresponding to the message displayed by the displaying unit;
a determining unit, configured to determine whether the operation track acquired by the acquiring unit is the same as a preset operation track; and
a processing unit, configured to process the message when the determining unit determines that the operation track is the same as the preset operation track.

In a first implementation manner of the second aspect,
the displaying unit is further configured to display prompt information, where the prompt information is used to confirm whether to process the message;
the determining unit is further configured to determine whether confirmation information corresponding to the prompt information displayed by the displaying unit is received; and
the processing unit is further configured to process the message when the determining unit determines that the confirmation information corresponding to the prompt information is received.

With reference to the second aspect or the first implementation manner of the second aspect, in a second implementation manner of the second aspect,
the displaying unit is further configured to display a message processing area;
the determining unit is further configured to determine whether the operation track the same as the preset operation track exists in the message processing area displayed by the displaying unit; and
the processing unit is further configured to process the message when the determining unit determines that the operation track the same as the preset operation track exists in the message processing area.

With reference to the second aspect, or the first implementation manner of the second aspect, or the second implementation manner of the second aspect, in a third implementation manner of the second aspect,
the displaying unit is further configured to display a first message processing area and a second message processing area; and
the determining unit is further configured to determine whether the operation track the same as the preset operation track exists in the first message processing area or the second message processing area displayed by the displaying unit.

With reference to the second aspect, or the first implementation manner of the second aspect, or the second implementation manner of the second aspect, or the third implementation manner of the second aspect, in a fourth implementation manner of the second aspect,
the processing unit is further configured to perform first processing on the message when the determining unit determines that the operation track the same as the preset operation track exists in the first message processing area; or
the processing unit is further configured to perform second processing on the message when the determining unit determines that the operation track the same as the preset operation track exists in the second message processing area.

With reference to the second aspect, or the first implementation manner of the second aspect, or the second implementation manner of the second aspect, or the third implementation manner of the second aspect, or the fourth implementation manner of the second aspect, in a fifth implementation manner of the second aspect:
the acquiring unit is further configured to acquire a sliding track corresponding to the message;
the determining unit is further configured to determine whether the sliding track acquired by the acquiring unit is the same as a preset sliding track, where the preset sliding track is used to trigger deletion of the message; and
the processing unit is further configured to delete the message when the determining unit determines that the sliding track is the same as the preset sliding track.

In the message processing method and apparatus provided in the embodiments of the present invention, a message is displayed on a lock screen interface first; an operation track corresponding to the message is acquired then; finally, it is determined whether the operation track is the same as a preset operation track, and if the operation track is the same as the preset operation track, the message is processed. Compared with a current case in which a terminal device needs to be unlocked to display a graphical interface of the terminal device, and then a message is processed, in the embodiments of the present invention, an operation track corresponding to a message is acquired in a lock screen state, and the message can be processed in the lock screen state according to an operation of a user, thereby decreasing complexity of message processing.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a message processing method according to Embodiment 1 of the present invention;
FIG. 2 is a schematic diagram of a structure of a message processing apparatus according to Embodiment 1 of the present invention;
FIG. 3 is a schematic diagram of a structure of a terminal device according to Embodiment 1 of the present invention;
FIG. 4 is a flowchart of a message processing method according to Embodiment 2 of the present invention;
FIG. 5 is a schematic diagram of a structure of a message processing apparatus according to Embodiment 2 of the present invention;
FIG. 6 is a schematic diagram of a structure of a terminal device according to Embodiment 2 of the present invention;
FIG. 7 is a display interface of a terminal device in a lock screen state according to Embodiment 2 of the present invention;
FIG. 8 is a display interface of a terminal device in the lock screen state according to Embodiment 2 of the present invention;
FIG. 9 is a display interface of a terminal device in the lock screen state according to Embodiment 2 of the present invention;
FIG. 10 is a display interface of a terminal device in the lock screen state according to Embodiment 2 of the present invention;
FIG. 11 is a display interface of a terminal device in the lock screen state according to Embodiment 2 of the present invention; and
FIG. 12 is a display interface of a terminal device in the lock screen state according to Embodiment 2 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

To make advantages of the technical solutions of the present invention clearer, the following describes the present invention in detail with reference to the accompany drawings and embodiments.

### Embodiment 1

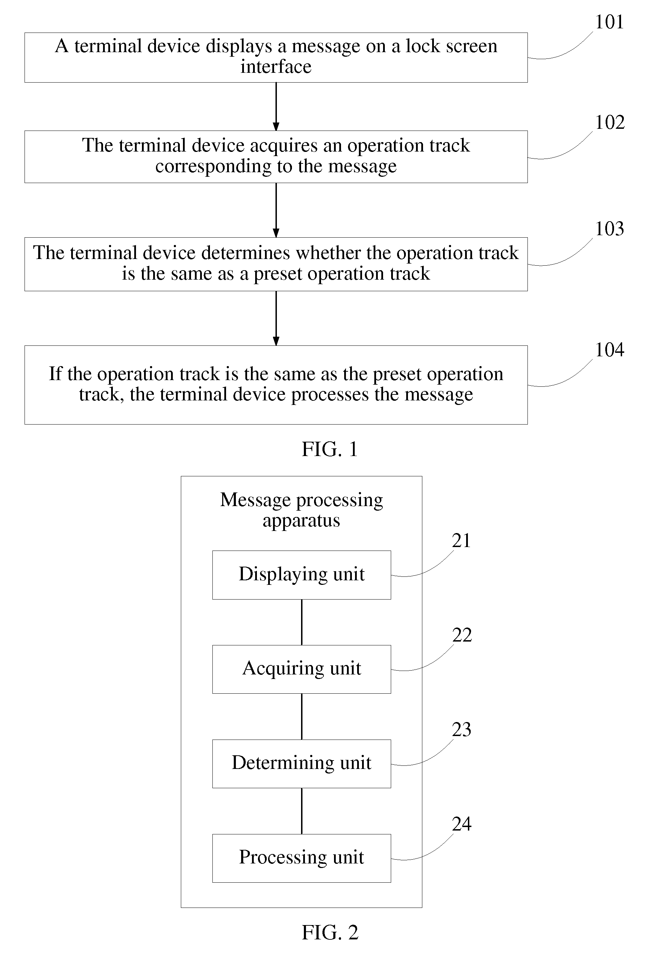

This embodiment of the present invention provides a message processing method. As shown in FIG. 1, the method includes:
101: A terminal device displays a message on a lock screen interface.

The lock screen interface of the terminal device may be a lock screen interface of the terminal device in a screen-on state.

In this embodiment of the present invention, the terminal device may be a mobile phone, a tablet computer, a smart watch, a pair of smart glasses, or the like, and the message displayed by the terminal device on the lock screen interface may be a short message service message, an email, a prompt message of an application program, or the like, which is not limited in this embodiment of the present invention. In this embodiment of the present invention, the terminal device displays, on the lock screen interface, content corresponding to the message, which can avoid opening a graphical interface of the terminal device by a user before the content corresponding to the message is viewed, thereby decreasing complexity of message processing.

102: The terminal device acquires an operation track corresponding to the message.

The operation track corresponding to the message may be a track corresponding to an operation such as sliding or clicking on a screen. Specifically, a sliding operation may be that a finger of the user or another operating device keeps touching the screen and moves on the screen, or that a finger of the user or another operating device drags a slider or an icon on the screen from one location to another location. The operation track corresponding to the message may be a track corresponding to a mid-air gesture or a track generated by an eyeball operation of the user. In this embodiment of the present invention, a terminal device equipped with an eyeball movement tracking apparatus may record the eyeball operation of the user.

103: The terminal device determines whether the operation track is the same as a preset operation track.

The preset operation track is used to trigger processing on the message.

104: If the operation track is the same as the preset operation track, the terminal device processes the message.

A message processing operation performed by the terminal device may be deleting a message, saving a message, adding a message to a to-do list, reminding later, or the like.

Specifically, adding a message to a to-do list may be adding the message to an application program installed on the terminal device. In this embodiment of the present invention, the user may unlock the terminal device to open the graphical interface of the terminal device, and then run an application program corresponding to the to-do list, so that the user can view each message added to the to-do list.

In this embodiment of the present invention, a processing operation corresponding to adding a message to a to-do list is added, so that the user can be reminded to process an unprocessed message. For example, after the user unlocks the terminal device and opens the graphical interface of the terminal device, the terminal device may display each unprocessed message in the application program corresponding to the to-do list, so that the user can be reminded to process the unprocessed message.

Further, when a processing operation of reminding later is performed on the message, the terminal device may no longer display the message on the lock screen interface. When the user unlocks the terminal device and opens the graphical interface of the terminal device, prompt information pops up on the graphical interface of the terminal device. The prompt information may be all or partial content of the message displayed on a main interface of the graphical interface, or may be an icon corresponding to the message displayed on a notification bar on the graphical interface. In this embodiment of the present invention, when the processing operation of reminding later is performed on the message, the terminal device may also remind, after a preset time, the user by means of playing a sound, vibrating, or displaying an icon.

In this embodiment of the present invention, the processing operation corresponding to the reminding later can remind, when the user unlocks the terminal device and opens the graphical interface of the terminal device, the user that there is an unprocessed message, and can further remind the user to process the unprocessed message.

Further, as a specific implementation of the method shown in FIG. 1, this embodiment of the present invention provides a message processing apparatus. As shown in FIG. 2, an entity of the apparatus may be a terminal device such as a mobile phone, a tablet computer, a smart watch, or a pair of smart glasses. The apparatus includes: a displaying unit 21, an acquiring unit 22, a determining unit 23, and a processing unit 24.

The displaying unit 21 is configured to display a message on a lock screen interface.

The acquiring unit 22 is configured to acquire an operation track corresponding to the message displayed by the displaying unit 21.

The determining unit 23 is configured to determine whether the operation track acquired by the acquiring unit 22 is the same as a preset operation track.

The processing unit 24 is configured to process the message when the determining unit 23 determines that the operation track is the same as the preset operation track.

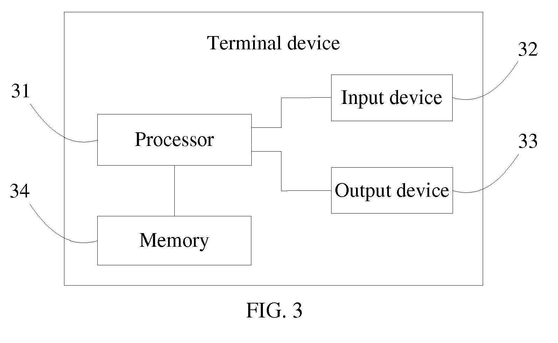

Furthermore, the entity of the message processing apparatus may be a terminal device. As shown in FIG. 3, the terminal device may include: a processor 31, an input device 32, an output device 33, and a memory 34. The input device 32, the output device 33, and the memory 34 are connected to the processor 31 separately.

The processor 31 is configured to display a message on a lock screen interface.

The processor 31 is further configured to acquire an operation track corresponding to the message.

The processor 31 is further configured to determine whether the operation track is the same as a preset operation track.

The processor 31 is further configured to process the message when the operation track is the same as the preset operation track.

It should be noted that, for other corresponding descriptions corresponding to functional units in the message processing apparatus provided in this embodiment of the present invention, reference may be made to corresponding descriptions in FIG. 1, and no further details are provided herein again.

In the message processing method and apparatus provided in this embodiment of the present invention, a message is displayed on a lock screen interface first; an operation track corresponding to the message is acquired then; finally, it is determined whether the operation track is the same as a preset operation track, and if the operation track is the same as the preset operation track, the message is processed. Compared with a current case in which a terminal device needs to be unlocked to display a graphical interface of the terminal device, and then a message is processed, in this embodiment of the present invention, an operation track corresponding to a message is acquired in a lock screen state, and the message can be processed in the lock screen state according to an operation of a user, thereby decreasing complexity of message processing.

### Embodiment 2

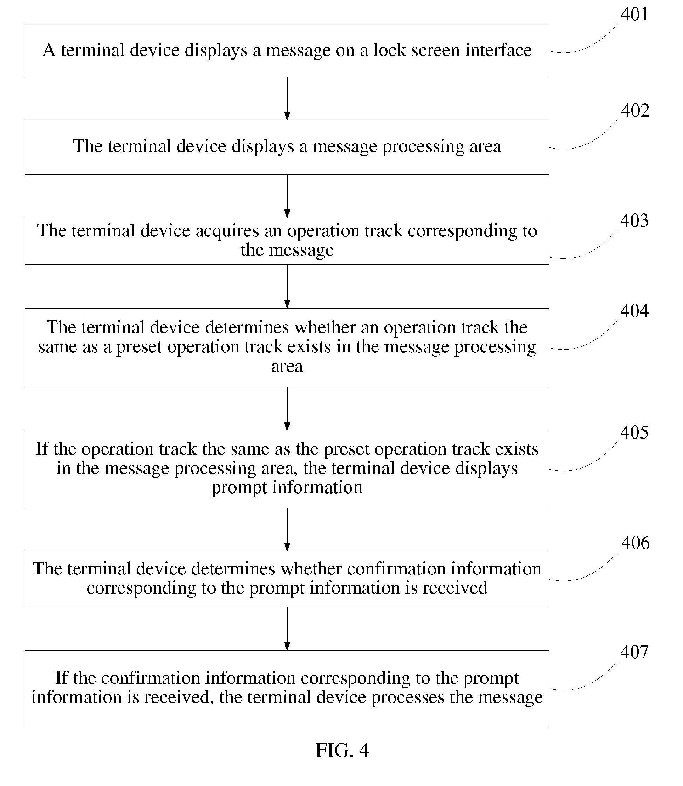

This embodiment of the present invention provides a message processing method. As shown in FIG. 4, the method includes:
401: A terminal device displays a message on a lock screen interface.

The lock screen interface of the terminal device may be a lock screen interface of the terminal device in a screen-on state.

In this embodiment of the present invention, the terminal device may be a mobile phone, a tablet computer, a smart watch, a pair of smart glasses, or the like, the message displayed by the terminal device on the lock screen interface may be a short message service message, an email, a prompt message of an application program, or the like, which is not limited in this embodiment of the present invention. In this embodiment of the present invention, the terminal device displays, on the lock screen interface, content corresponding to the message, which can avoid opening a graphical interface of the terminal device by a user before the content corresponding to the message is viewed, thereby decreasing complexity of message processing.

402: The terminal device displays a message processing area.

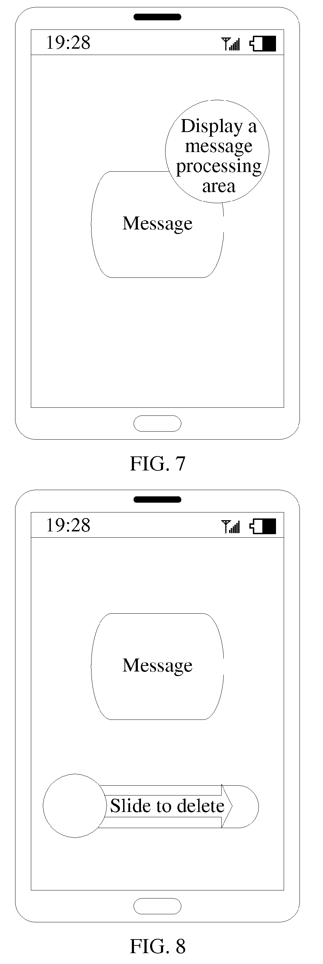

In this embodiment of the present invention, step 402 may be specifically: the terminal device first displays prompt information, then determines whether confirmation information corresponding to the prompt information is received, and if the confirmation information corresponding to the prompt information is received, displays the message processing area. The prompt information is used to confirm whether to display the message processing area. In this embodiment of the present invention, as shown in FIG. 7, the terminal device is a mobile phone, and the terminal device displays prompt information "display a message processing area" on a lock screen interface, to prompt the user whether to display the processing area, thereby avoiding a misoperation of the user.

403: The terminal device acquires an operation track corresponding to the message.

The operation track corresponding to the message may be a track corresponding to an operation such as sliding or clicking on a screen. Specifically, a sliding operation may be that a finger of the user or another operating device keeps touching the screen and moves on the screen, or that a finger of the user or another operating device drags a slider or an icon on the screen from one location to another location. The operation track corresponding to the message may be a track corresponding to a mid-air gesture or a track generated by an eyeball operation of the user. In this embodiment of the present invention, a terminal device equipped with an eyeball movement tracking apparatus may record the eyeball operation of the user.

404: The terminal device determines whether an operation track the same as a preset operation track exists in the message processing area.

The preset operation track is used to trigger processing on the message.

For example, in FIG. 8, the terminal device is a mobile phone, and the message processing area displayed on the lock screen interface of the terminal device is a sliding area. In this case, the user may process the message by sliding in the sliding area. A sliding track may be configured by a server in advance, or may be configured by the user, which is not limited in this embodiment of the present invention.

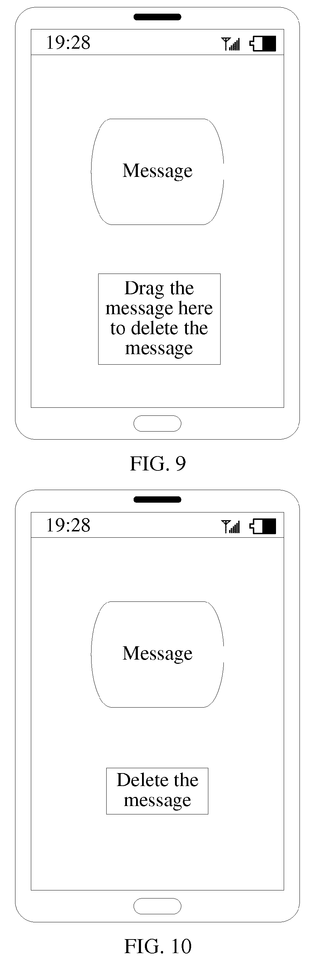

For another example, in FIG. 9, the terminal device is a mobile phone, and the message processing area displayed on the lock screen interface of the terminal device is a dragging area. In this case, the user may process the message by dragging the message to the dragging area.

In this embodiment of the present invention, for example, in FIG. 10, the terminal device is a mobile phone, and the message processing area displayed on the lock screen interface of the terminal device is a clicking area. In this case, the user may process the message by clicking in the clicking area.

405: If the operation track the same as the preset operation track exists in the message processing area, the terminal device displays prompt information.

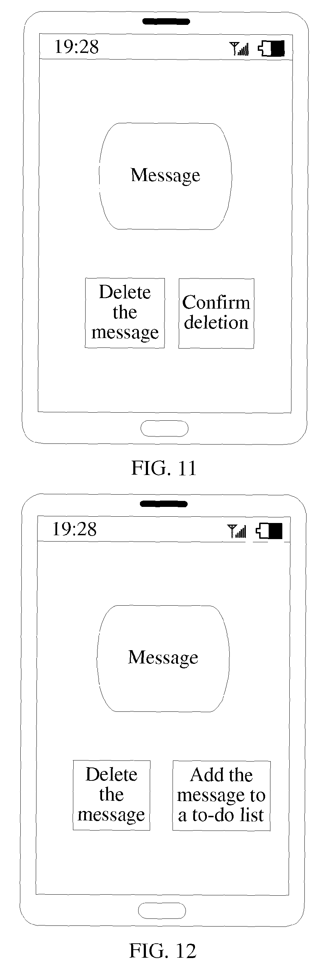

The prompt information is used to confirm whether to process the message. In this embodiment of the present invention, as shown in FIG. 11, the terminal device displays prompt information, to prompt the user whether to process the message, thereby avoiding a misoperation of the user.

406: The terminal device determines whether confirmation information corresponding to the prompt information is received.

407: If the confirmation information corresponding to the prompt information is received, the terminal device processes the message.

A message processing operation performed by the terminal device may be deleting a message, saving a message, adding a message to a to-do list, reminding later, or the like.

Specifically, adding a message to a to-do list may be adding the message to an application program installed on the terminal device. In this embodiment of the present invention, the user may unlock the terminal device to open the graphical interface of the terminal device, and then run an application program corresponding to the to-do list, so that the user can view each message added to the to-do list.

In this embodiment of the present invention, a message processing area corresponding to the to-do list is added, so that the user can be reminded to process an unprocessed message. For example, after the user unlocks the terminal device and opens the graphical interface of the terminal device, the terminal device may display each unprocessed message in the application program corresponding to the to-do list, so that the user can be reminded to process the unprocessed message.

Further, when a processing operation of reminding later is performed on the message, the terminal device may no longer display the message on the lock screen interface. When the user unlocks the terminal device and opens the graphical interface of the terminal device, prompt information pops up on the graphical interface of the terminal device. The prompt information may be all or partial content of the message displayed on a main interface of the graphical interface, or may be an icon corresponding to the message displayed on a notification bar on the graphical interface. In this embodiment of the present invention, when the processing operation of reminding later is performed on the message, the terminal device may also remind, after a preset time, the user by means of playing a sound, vibrating, or displaying an icon.

In this embodiment of the present invention, the processing operation corresponding to the reminding later can remind, when the user unlocks the terminal device and opens the graphical interface of the terminal device, the user that there is an unprocessed message, and can further remind the user to process the unprocessed message.

In this embodiment of the present invention, step 402 may also be: the terminal device displays a first message processing area and a second message processing area. In this case, step 404 may include: the terminal device determines whether the operation track the same as the preset operation track exists in the first message processing area or the second message processing area. Further, if the operation track the same as the preset operation track exists in the first message processing area, first processing is performed on the message; if the operation track the same as the preset operation track exists in the second message processing area, second processing is performed on the message.

For example, in FIG. 12, the first processing is deleting the message, and the second processing is adding the message to the to-do list. If the operation track the same as the preset operation track exists in the message processing area corresponding to the deleting the message, the terminal device deletes the message; if the operation track the same as the preset operation track exists in the message processing area corresponding to the adding the message to the to-do list, the terminal device adds the message to the to-do list.

In this embodiment of the present invention, step 403 may also be: the terminal device acquires a sliding track corresponding to the message. In this case, step 404 may include: the terminal device determines whether the sliding track is the same as a preset sliding track. Further, if the sliding track is the same as the preset sliding track, the message is deleted. The preset sliding track is used to trigger deletion of the message. In this embodiment of the present invention, the user may delete the message by sliding on the lock screen interface according to the preset sliding track, thereby decreasing complexity of message deletion on the lock screen interface.

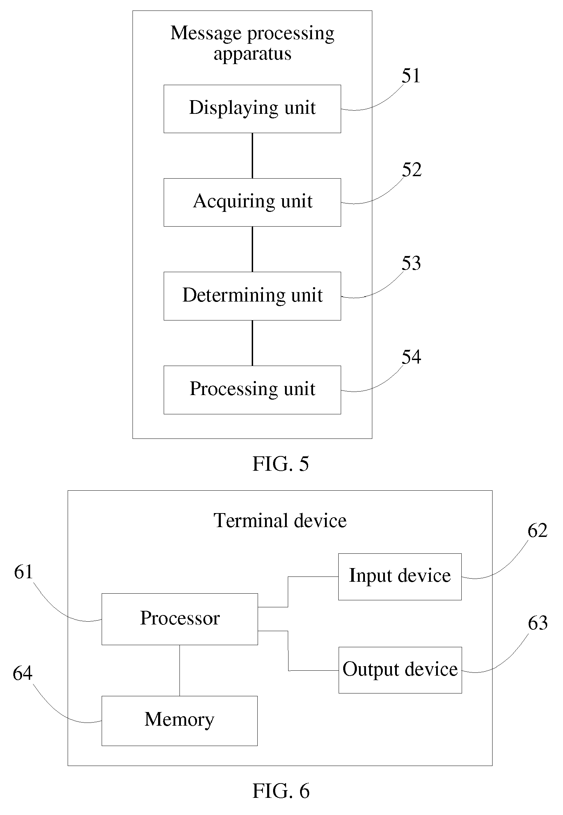

Further, as a specific implementation of the method shown in FIG. 4, this embodiment of the present invention provides a message processing apparatus. As shown in FIG. 5, an entity of the apparatus may be a terminal device such as a mobile phone, a tablet computer, a smart watch, or a pair of smart glasses. The apparatus includes: a displaying unit 51, an acquiring unit 52, a determining unit 53, and a processing unit 54.

The displaying unit 51 is configured to display a message on a lock screen interface.

The acquiring unit 52 is configured to acquire an operation track corresponding to the message displayed by the displaying unit 51.

The determining unit 53 is configured to determine whether the operation track acquired by the acquiring unit 52 is the same as a preset operation track.

The processing unit 54 is configured to process the message when the determining unit 53 determines that the operation track is the same as the preset operation track.

The displaying unit 51 is further configured to display prompt information.

The prompt information is used to confirm whether to process the message.

The determining unit 53 is further configured to determine whether confirmation information corresponding to the prompt information displayed by the displaying unit 51 is received.

The processing unit 54 is further configured to process the message when the determining unit 53 determines that the confirmation information corresponding to the prompt information is received.

The displaying unit 51 is further configured to display a message processing area.

The determining unit 53 is further configured to determine whether the operation track the same as the preset operation track exists in the message processing area displayed by the displaying unit 51.

The processing unit 54 is further configured to process the message when the determining unit 53 determines that the operation track the same as the preset operation track exists in the message processing area.

The displaying unit 51 is further configured to display a first message processing area and a second message processing area.

The determining unit 53 is further configured to determine whether the operation track the same as the preset operation track exists in the first message processing area or the second message processing area displayed by the displaying unit 51.

The processing unit 54 is further configured to perform first processing on the message when the determining unit 53 determines that the operation track the same as the preset operation track exists in the first message processing area.

The processing unit 54 is further configured to perform second processing on the message when the determining unit 53 determines that the operation track the same as the preset operation track exists in the second message processing area.

The acquiring unit 52 is further configured to acquire a sliding track corresponding to the message.

The determining unit 53 is further configured to determine whether the sliding track acquired by the acquiring unit 52 is the same as a preset sliding track.

The preset sliding track is used to trigger deletion of the message.

The processing unit 54 is further configured to delete the message when the determining unit 53 determines that the sliding track is the same as the preset sliding track.

Furthermore, the entity of the message processing apparatus may be a terminal device. As shown in FIG. 6, the terminal device may include: a processor 61, an input device 62, an output device 63, and a memory 64. The input device 62, the output device 63, and the memory 64 are connected to the processor 61 separately.

The processor 61 is configured to display a message on a lock screen interface.

The processor 61 is further configured to acquire an operation track corresponding to the message.

The processor 61 is further configured to determine whether the operation track is the same as a preset operation track.

The processor 61 is further configured to process the message when the operation track is the same as the preset operation track.

The processor 61 is further configured to display prompt information.

The prompt information is used to confirm whether to process the message.

The processor 61 is further configured to determine whether confirmation information corresponding to the prompt information is received.

The processor 61 is further configured to process the message when the confirmation information corresponding to the prompt information is received.

The processor 61 is further configured to display a message processing area.

The processor 61 is further configured to determine whether the operation track the same as the preset operation track exists in the message processing area.

The processor 61 is further configured to process the message when the operation track the same as the preset operation track exists in the message processing area.

The processor 61 is further configured to display a first message processing area and a second message processing area.

The processor 61 is further configured to determine whether the operation track the same as the preset operation track exists in the first message processing area or the second message processing area.

The processor 61 is further configured to perform first processing on the message when the operation track the same as the preset operation track exists in the first message processing area.

The processor 61 is further configured to perform second processing on the message when the operation track the same as the preset operation track exists in the second message processing area perform second processing on the message.

The processor 61 is further configured to acquire a sliding track corresponding to the message.

The processor 61 is further configured to determine whether the sliding track is the same as a preset sliding track.

The preset sliding track is used to trigger deletion of the message.

The processor 61 is further configured to delete the message when the sliding track is the same as the preset sliding track.

It should be noted that, for other corresponding descriptions corresponding to functional units in the message processing apparatus provided in this embodiment of the present invention, reference may be made to corresponding descriptions in FIG. 4, and no further details are provided herein again.

In the message processing method and apparatus provided in this embodiment of the present invention, a message is displayed on a lock screen interface first; an operation track corresponding to the message is acquired then; finally, it is determined whether the operation track is the same as a preset operation track, and if the operation track is the same as the preset operation track, the message is processed. Compared with a current case in which a terminal device needs to be unlocked to display a graphical interface of the terminal device, and then a message is processed, in this embodiment of the present invention, an operation track corresponding to a message is acquired in a lock screen state, and the message can be processed in the lock screen state according to an operation of a user, thereby decreasing complexity of message processing.

The message processing apparatus provided in this embodiment of the present invention may implement the method embodiment described above. For specific functional implementations, refer to descriptions in the method embodiment, and no further details are provided herein again. The message processing method and apparatus provided in this embodiment of the present invention may be applied to message processing by a terminal device in a lock screen state, but are not limited thereto.

A person of ordinary skill in the art may understand that all or some of the processes of the methods in the embodiments may be implemented by a computer program instructing relevant hardware. The program may be stored in a computer-readable storage medium. When the program runs, the processes of the methods in the embodiments are performed. The foregoing storage medium may include: a magnetic disk, an optical disc, a read-only memory (Read-Only Memory, ROM), a random access memory (Random Access Memory, RAM), or the like.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A message processing method, comprising:
displaying a message on a lock screen interface;
acquiring an operation track corresponding to the message;
determining whether the operation track is the same as a preset operation track; and
processing the message if the operation track is the same as the preset operation track.

2. The message processing method according to claim 1, wherein before the processing the message, the method further comprises:
displaying prompt information, wherein the prompt information is used to confirm whether to process the message; and
determining whether confirmation information corresponding to the prompt information is received; and
the processing the message comprises:
processing the message if the confirmation information corresponding to the prompt information is received.

3. The message processing method according to claim 1, wherein before the acquiring an operation track corresponding to the message, the method further comprises:
displaying a message processing area;
the determining whether the operation track is the same as a preset operation track comprises:
determining whether the operation track the same as the preset operation track exists in the message processing area; and
the processing the message if the operation track is the same as the preset operation track comprises:
processing the message if the operation track the same as the preset operation track exists in the message processing area.

4. The message processing method according to claim 3, wherein the displaying a message processing area comprises:
displaying a first message processing area and a second message processing area; and
the determining whether the operation track the same as the preset operation track exists in the message processing area comprises:
determining, whether the operation track the same as the preset operation track exists in the first message processing area or the second message processing area.

5. The message processing method according to claim 4, wherein the processing the message if the operation track the same as the preset operation track exists in the message processing area comprises:
performing first processing on the message if the operation track the same as the preset operation track exists in the first message processing area; or
performing second processing on the message if the operation track the same as the preset operation track exists in the second message processing area.

6. The message processing method according to claim 1, wherein the acquiring an operation track corresponding to the message comprises:
acquiring a sliding track corresponding to the message;
the determining whether the operation track is the same as a preset operation track comprises:
determining whether the sliding track is the same as a preset sliding track, wherein the preset sliding track is used to trigger deletion of the message; and
the processing the message if the operation track is the same as the preset operation track comprises:
deleting the message if the sliding track is the same as the preset sliding track.

7. A message processing apparatus, comprising:
a displaying unit, configured to display a message on a lock screen interface;
an acquiring unit, configured to acquire an operation track corresponding to the message displayed by the displaying unit;
a determining unit, configured to determine whether the operation track acquired by the acquiring unit is the same as a preset operation track; and
a processing unit, configured to process the message when the determining unit determines that the operation track is the same as the preset operation track.

8. The message processing apparatus according to claim 7, wherein:
the displaying unit is further configured to display prompt information, wherein the prompt information is used to confirm whether to process the message;
the determining unit is further configured to determine whether confirmation information corresponding to the prompt information displayed by the displaying unit is received; and
the processing unit is further configured to process the message when the determining unit determines that the confirmation information corresponding to the prompt information is received.

9. The message processing apparatus according to claim 7, wherein:
the displaying unit is further configured to display a message processing area;
the determining unit is further configured to determine whether the operation track the same as the preset operation track exists in the message processing area displayed by the displaying unit; and
the processing unit is further configured to process the message when the determining unit determines that the operation track the same as the preset operation track exists in the message processing area.

10. The message processing apparatus according to claim 9, wherein:
the displaying unit is further configured to display a first message processing area and a second message processing area; and
the determining unit is further configured to determine whether the operation track the same as the preset operation track exists in the first message processing area or the second message processing area displayed by the displaying unit.

11. The message processing apparatus according to claim 10, wherein:
the processing unit is further configured to perform first processing on the message when the determining unit determines that the operation track the same as the preset operation track exists in the first message processing area; or
the processing unit is further configured to perform second processing on the message when the determining unit determines that the operation track the same as the preset operation track exists in the second message processing area.

12. The message processing apparatus according to claim 9, wherein:
the acquiring unit is further configured to acquire a sliding track corresponding to the message;
the determining unit is further configured to determine whether the sliding track acquired by the acquiring unit is the same as a preset sliding track, wherein the preset sliding track is used to trigger deletion of the message; and
the processing unit is further configured to delete the message when the determining unit determines that the sliding track is the same as the preset sliding track.
